# FASCICULE DE BREVET EUROPEEN

(11) **EP 3 931 009 B1**
(45) Date de publication et mention de la délivrance du brevet: **03.04.2024**
(21) Numéro de dépôt: 20702655.0
(22) Date de dépôt: 06.02.2020
(51) Int. Cl.: B60H 1/00, B60H 1/32, H01M 10/663, H01M 10/613, H01M 10/625, H01M 10/6568

(54) **PROCÉDÉ DE GESTION D'UN CIRCUIT DE CLIMATISATION RELIÉ À UN CIRCUIT DE REFROIDISSEMENT D'UNE BATTERIE**
VERFAHREN ZUR VERWALTUNG EINES MIT EINEM BATTERIEKÜHLKREISLAUF VERBUNDENEN KLIMAANLAGENKREISLAUFS
METHOD FOR MANAGING AN AIR-CONDITIONING CIRCUIT CONNECTED TO A BATTERY COOLING CIRCUIT

(30) Priorité: 27.02.2019 FR 1902034
(43) Date de publication de la demande: 05.01.2022
(73) Titulaire: Renault s.a.s, 92100 Boulogne Billancourt (FR)
(72) Inventeur: RODRIGUES, Filipe, 78120 Rambouillet (FR)
(74) Mandataire: Renault Group
(86) Numéro de dépôt international: PCT/EP2020/052956
(87) Numéro de publication internationale: WO 2020/173678

(56) Documents cités:
- FR-A1- 3 031 576
- FR-A3- 3 041 484
- US-A1- 2018 215 231
- US-A1- 2018 281 564

## Description

L'invention se rapporte à un procédé de gestion d'un circuit de climatisation relié à un circuit de refroidissement d'une batterie. Le terme « relié » signifie qu'il existe une interaction entre le circuit de climatisation et le circuit de refroidissement de la batterie.

Sur les véhicules de type PHEV (de l'anglais *Plug-in-Hybrid Electric Vehicle*), le système de climatisation habitacle et le système de refroidissement de la batterie électrique haute tension, sont physiquement interconnectés au niveau d'un chiller, mettant en contact un fluide de climatisation et une circulation d'eau de refroidissement de la batterie. En effet, le refroidissement de la batterie est assuré par l'intermédiaire d'une extension du circuit de climatisation traditionnel. Pour rappel, un chiller est un groupe de production d'eau froide en circuit fermé, qui permet le refroidissement et le contrôle de la température d'eau.

Il s'avère que dans certains cas, lors d'une demande de refroidissement de la batterie, l'eau de refroidissement de celle-ci, qui est portée à une certaine température au contact de ladite batterie, circule dans le chiller et contribue momentanément à augmenter la température du fluide de climatisation. Pendant cette phase de refroidissement de la batterie, une quantité moins importante de fluide de climatisation étant allouée par ailleurs au refroidissement de l'habitacle, une personne présente dans le véhicule à ce moment-là, va alors percevoir une légère montée de la température dans l'habitacle, malgré l'activation du système de climatisation. Or, ce réchauffement momentané de l'habitacle peut apparaitre comme une mauvaise finition du système de climatisation, qu'un client est susceptible de mal percevoir.

On connait le document US2018/215231 qui décrit un procédé de gestion de circuit de climatisation conforme au préambule de la revendication 1.

Un procédé selon l'invention, permet de gérer un système de climatisation relié à un circuit de refroidissement d'une batterie électrique, en empêchant une montée en température temporaire du fluide de climatisation, lors d'une demande de refroidissement de la batterie.

L'invention a pour objet un procédé de gestion d'un système de climatisation d'un véhicule comprenant une batterie électrique, ledit système comportant un premier circuit de circulation d'un fluide de climatisation, relié par l'intermédiaire d'un chiller à un second circuit de circulation d'eau destiné à refroidir ladite batterie, le premier circuit comprenant un condenseur, un compresseur, un évaporateur, deux électrovannes et deux détendeurs.

Selon l'invention, le procédé comprend les étapes suivantes :
- Une étape de demande de refroidissement de la batterie alors que le système de climatisation 1 est en fonctionnement,
- Une étape de coupure de la circulation d'eau dans le second circuit pendant une période donnée, ladite étape se déclenchant juste après l'étape de demande de refroidissement de la batterie,
- Une étape de rétablissement de la circulation d'eau dans le second circuit après la période donnée afin de réactiver le chiller et ainsi refroidir ladite batterie.

Le principe d'un procédé selon l'invention, est de couper la circulation d'eau dans le second circuit juste après une demande de refroidissement de la batterie, afin d'empêcher momentanément l'eau dudit second circuit de circuler dans le chiller et donc de réchauffer temporairement le fluide de refroidissement du système de climatisation. En effet, l'eau du second circuit ayant déjà servi à refroidir la batterie, est portée à une certaine température, et sa mise au contact avec le fluide de refroidissement dans le chiller risque d'augmenter la température dudit fluide de refroidissement. Les passagers présents dans le véhicule vont alors subir un léger réchauffement alors que le système de climatisation fonctionne. Or, un tel phénomène est à éviter, car il sera mal perçu par une personne présente dans le véhicule. Il est important de préciser que la coupure d'eau est momentanée, c'est-à-dire réalisée sur une période assez courte n'excédant pas quelques dizaines de secondes, car il la batterie doit impérativement être faite puisqu'une demande en a été faite. Avantageusement, la demande de refroidissement de la batterie est réalisée au moyen d'un calculateur embarqué dans le véhicule. Avantageusement, la température de la batterie est connue à chaque instant de roulage du véhicule, soit directement au moyen d'un capteur de température mesurant la température de la batterie, soit indirectement au moyen de la détermination d'un paramètre qui est représentatif de la température de ladite batterie. L'étape de coupure d'eau intervient dans un délai très court après la demande de refroidissement de la batterie, ledit délai étant préférentiellement inférieur à 5 secondes, et de façon avantageuse inférieur à 1 seconde. Un tel procédé peut être mis en oeuvre dans un véhicule électrique ou un véhicule hybride.

Selon une caractéristique possible de l'invention, l'étape de coupure de la circulation d'eau s'effectue sur une période inférieure ou égale à 60 secondes. Il a été observé que sur une telle période, la température de la batterie ne pouvait pas atteindre une valeur critique, à partir de laquelle la batterie serait susceptible de se dégrader.

Selon une caractéristique possible de l'invention, l'étape de coupure de la circulation d'eau s'effectue sur une période inférieure ou égale à 30 secondes.

Selon une caractéristique possible de l'invention, les étapes de coupure d'eau et de rétablissement de la circulation d'eau s'effectuent au moyen d'une électrovanne. En effet, le fonctionnement d'une telle électrovanne est précis, fiable et reproductif. De plus, l'ouverture ou la fermeture d'une telle vanne est quasiment instantané dès qu'un ordre d'ouverture ou de fermeture lui a été transmis.

Selon une caractéristique possible de l'invention, l'étape de demande de refroidissement de la batterie est déclenchée lorsque la batterie atteint une température seuil prédéterminée. En effet, à chaque fois que la batterie se retrouve en mesure d'atteindre cette température critique, une demande de refroidissement est alors effectuée afin de s'assurer que la batterie ne dépassera pas cette température seuil.

Selon une caractéristique possible de l'invention, le premier circuit de circulation du fluide de climatisation comprend un condenseur, un compresseur, un évaporateur, deux électrovannes et deux détendeurs.

Selon une caractéristique possible de l'invention, le fluide de climatisation est un fluide frigorigène 1234yf. Il s'agit d'un exemple illustratif et non limitatif d'un fluide de climatisation pouvant être utilisé dans un véhicule automobile dans lequel un procédé selon l'invention pourrait être mis en oeuvre.

Selon une caractéristique possible de l'invention, le second circuit de circulation d'eau comprend une pompe. Cette pompe sert à faire circuler l'eau de refroidissement dans le second circuit afin de refroidir la batterie.

Selon une caractéristique possible de l'invention, les différentes étapes sont gérées par une unité centrale de calcul embarquée dans le véhicule. Cette centrale de calcul est dotée d'un logiciel capable de gérer le système de climatisation et le second circuit de refroidissement de la batterie, soit de façon indépendante, soit de façon couplée dès lors qu'une demande de refroidissement de la batterie a été demandée.

L'invention a pour autre objet, un véhicule comprenant une batterie électrique, un système de climatisation comportant un premier circuit de circulation d'un fluide de climatisation comprenant un condenseur, un compresseur, un évaporateur, deux électrovannes et deux détendeurs, relié par l'intermédiaire d'un chiller à un second circuit de circulation d'eau destiné à refroidir ladite batterie.

Selon l'invention, le véhicule comprend une unité centrale de calcul dotée d'un logiciel apte à mettre en oeuvre un procédé de gestion conforme à l'invention. Ce logiciel est capable de gérer le système de climatisation et le second circuit de refroidissement de la batterie, soit de façon indépendante, soit de façon couplée dès lors qu'une demande de refroidissement de la batterie a été demandée. Dans ce deuxième cas, le logiciel va piloter un procédé selon l'invention.

Un procédé de gestion selon l'invention, présente l'avantage d'être capable de gérer de façon satisfaisante un système de climatisation d'un véhicule et un circuit de refroidissement d'une batterie dudit véhicule, au moyen d'une utilisation judicieuse de la circulation d'eau dans ledit circuit de refroidissement, ne nécessitant, ni une modification structurelle dudit système et/ou dudit circuit, ni l'ajout d'éléments supplémentaires pouvant être source d'encombrement et de surcoûts.

On donne, ci-après, une description détaillée d'un mode de réalisation préféré d'un procédé de gestion selon l'invention, en se référant aux figures suivantes :
[Fig. 1] est une vue schématique d'un plan décrivant un système de climatisation couplé à un circuit de refroidissement d'une batterie permettant d'appliquer un procédé selon l'invention,
[Fig. 2] est un diagramme illustrant des exemples de variation de différentes températures au niveau du système de climatisation en fonction du temps, lorsqu'une demande de refroidissement de la batterie est effectuée,
[Fig. 3] est un diagramme illustrant des exemples de variation de différentes températures au niveau du système de climatisation en fonction du temps, une fois qu'une demande de refroidissement de la batterie a été effectuée.

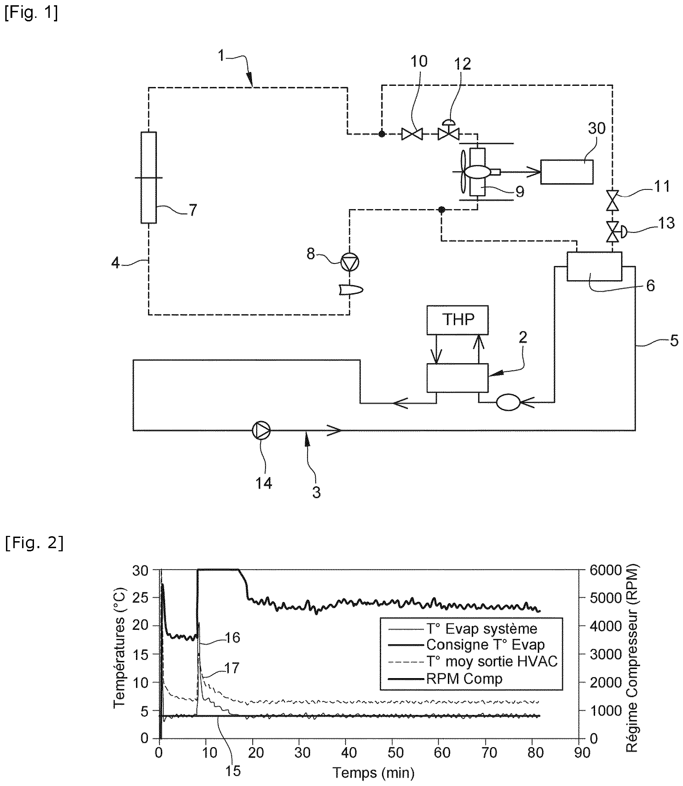

En se référant à la figure 1, certains véhicules automobiles électriques ou hybrides sont dotés d'un système de climatisation 1, d'une batterie électrique 2 et d'un système de refroidissement 3 de ladite batterie 2 relié audit système de climatisation 1 par l'intermédiaire d'un chiller 6. Le système de climatisation 1 comprend un premier circuit 4 de circulation d'un fluide de climatisation, pouvant par exemple être un fluide frigorigène 1234yf, et le système de refroidissement 3 de la batterie 2 comprend un second circuit 5 de circulation d'eau. Le premier circuit 4 de circulation du fluide de climatisation, comprend classiquement un condenseur 7, un compresseur 8, un évaporateur 9 permettant d'assurer un refroidissement dans l'habitacle du véhicule, deux électrovannes 10, 11, deux détendeurs 12, 13 et le chiller 6. Le deuxième circuit 5 comporte une pompe 14, une électrovanne et le chiller 6. Le fluide de climatisation circulant dans le premier circuit 4 et l'eau de refroidissement circulant dans le second circuit 5 sont mis au contact l'un de l'autre au niveau du chiller 6 qui est placé entre lesdits deux circuits 4, 5. Le chiller 6 peut être assimilé à un échangeur thermique permettant d'assurer des échanges thermiques entre le fluide de climatisation du système de climatisation 1 et l'eau de refroidissement du système de refroidissement de la batterie électrique 2. Ces véhicules possèdent également une unité centrale de calcul permettant de piloter électroniquement un certain nombre de fonctions dans le véhicule, comme par exemple le refroidissement de la batterie 2.

Or, dans ce type de configuration, à savoir un couplage au niveau d'un chiller 6, du système de climatisation 1 et du système de refroidissement 3 de la batterie 2, il peut se produire un phénomène intempestif, qui va dégrader la qualité perçue du véhicule. Il s'agit d'une montée temporaire de la température dans l'habitacle 30 du véhicule alors que le système de climatisation 1 est en fonctionnement, lors d'une demande de refroidissement de la batterie 2. En effet, lors d'une telle demande, l'eau de refroidissement circulant dans le second circuit 5 et qui a déjà servi à refroidir la batterie 2, va circuler dans le chiller 6 et va donc réchauffer temporairement le fluide de climatisation. Durant ce réchauffement momentané du fluide de climatisation, les occupants du véhicule vont percevoir une légère montée en température dans l'habitacle du véhicule, alors que le système de climatisation 1 est activé. Cette légère montée en température peut apparaitre comme le signe d'une mauvaise finition du véhicule et sera donc mal perçue par un client qui aura fait l'acquisition d'un tel véhicule.

Un exemple de ce mauvais fonctionnement du système de climatisation 1 est illustré à la figure 2. Dans cet exemple, la température extérieure au véhicule est de 35°C, et la température initiale 15 de l'évaporateur 9, qui correspond à une température de consigne, est de 4°C. Sur l'activation du chiller 6, suite à la demande de refroidissement de la batterie 2, on observe un pic 16 de la température au niveau de l'évaporateur 9 de l'ordre de 21°C, engendrant un pic 17 de la température de l'air soufflé dans l'habitacle 30 de l'ordre de 16°C.

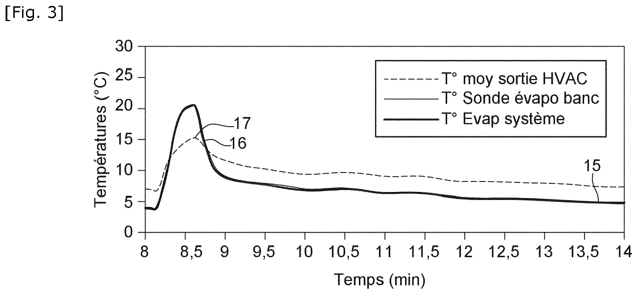

En se référant à la figure 3, il faut attendre environ 6 mn avant que la température de l'évaporateur 9 ne retombe à 4°C.

Afin d'empêcher de telles montées temporaires en température, il est préconisé dans un procédé selon l'invention de couper la circulation d'eau dans le second circuit 5 de refroidissement de la batterie dès qu'une demande de refroidissement de la batterie 2 est effectuée par l'unité centrale de calcul.

De façon plus précise, un procédé de gestion selon l'invention comprend les étapes suivantes :
- Une étape de demande de refroidissement de la batterie 2 alors que le système de climatisation 1 est en fonctionnement, Cette étape peut par exemple être conduite par l'intermédiaire d'au moins un capteur 20 de température, placé sur la batterie 2 et qui mesure en continu la température de ladite batterie 2. Ainsi, dès que la batterie 2 atteint une température seuil prédéterminée, un signal est transmis à l'unité centrale de calcul.
- Une étape de coupure de la circulation d'eau dans le second circuit 5 pendant une période donnée, ladite étape se déclenchant juste après l'étape de demande de refroidissement de la batterie 2. En effet, dès que l'unité centrale reçoit le signal correspondant à une demande de refroidissement de la batterie 2, elle pilote instantanément la fermeture de circulation d'eau dans le second circuit 5, afin de ne pas activer le chiller 6, cette fermeture étant réalisée, par exemple, par le biais d'une électrovanne placée dans le second circuit 5. La durée de cette coupure de circulation d'eau dans le second circuit 5 est inférieure ou égale à 60s, et préférentiellement est inférieure à 30s.
- Une étape de rétablissement de la circulation d'eau dans le second circuit 5 une fois que la période donnée s'est écoulée. Ce rétablissement est effectué au moyen d'une réactivation de la pompe 14 placée dans le second circuit 5, et avec une augmentation progressive du débit d'eau dans ledit second circuit 5.

Grâce à cette stratégie, en prenant pour référence l'exemple illustré aux figures 2 et 3, on observe un pic de la température au niveau de l'évaporateur 9 qui n'est plus que de 14°C au lieu de 21°C, engendrant un pic 17 de la température de l'air soufflé dans l'habitacle qui n'est plus que de 12°C au lieu de 16°C.

Lorsqu'une demande de refroidissement de la batterie 2 est demandée, la montée temporaire en température de l'air soufflé dans l'habitacle est réduite d'environ 5°C par rapport à la température obtenue sans coupure d'eau, permettant aux passagers présents dans le véhicule de ne pas ressentir de montée en température dans l'habitacle.

## Revendications

1. Procédé de gestion d'un système de climatisation (1) d'un véhicule comprenant une batterie électrique (2), ledit système (1) comportant un premier circuit (4) de circulation d'un fluide de climatisation, relié par l'intermédiaire d'un chiller (6) à un second circuit (5) de circulation d'eau destiné à refroidir ladite batterie (2), le premier circuit (4) de circulation du fluide de climatisation comprenant un condenseur (7), un compresseur (8), un évaporateur (9), deux électrovannes (10, 11) et deux détendeurs (12, 13), **caractérisé en ce que** le procédé comprend les étapes suivantes :
- Une étape de demande de refroidissement de la batterie (2) alors que le système de climatisation (1) est en fonctionnement,
- Une étape de coupure de la circulation d'eau dans le second circuit (5) pendant une période donnée, ladite étape se déclenchant juste après l'étape de demande de refroidissement de la batterie (2),
- Une étape de rétablissement de la circulation d'eau dans le second circuit (5) après la période donnée afin de réactiver le chiller (6) et ainsi refroidir ladite batterie (2).

2. Procédé de gestion selon la revendication 1, **caractérisé en ce que** l'étape de coupure de la circulation d'eau s'effectue sur une période inférieure ou égale à 60 secondes.

3. Procédé de gestion selon la revendication 2, **caractérisé en ce que** l'étape de coupure de la circulation d'eau s'effectue sur une période inférieure ou égale à 30 secondes.

4. Procédé de gestion selon l'une quelconque des revendications 1 à 3, **caractérisé en ce que** les étapes de coupure d'eau et de rétablissement de la circulation d'eau s'effectuent au moyen d'une électrovanne.

5. Procédé de gestion selon l'une quelconque des revendications 1 à 4, **caractérisé en ce que** l'étape de demande de refroidissement de la batterie (2) est déclenchée lorsque la batterie (2) atteint une température seuil prédéterminée.

6. Procédé de gestion selon l'une quelconque des revendications 1 à 5, **caractérisé en ce que** le fluide de climatisation est un fluide frigorigène 1234yf.

7. Procédé selon l'une quelconque des revendications 1 à 6 **caractérisé en ce que** le second circuit (5) de circulation d'eau comprend une pompe (14).

8. Procédé selon l'une quelconque des revendications 1 à 7, **caractérisé en ce que** les différentes étapes sont gérées par une unité centrale de calcul embarquée dans le véhicule.

9. Véhicule comprenant une batterie électrique, un système de climatisation comportant un premier circuit (4) de circulation d'un fluide de climatisation comprenant un condenseur (7), un compresseur (8), un évaporateur (9), deux électrovannes (10, 11) et deux détendeurs (12, 13) , relié par l'intermédiaire d'un chiller (6) à un second circuit (5) de circulation d'eau destiné à refroidir ladite batterie (2), **caractérisé en ce qu'**il comprend une unité centrale de calcul dotée d'un logiciel apte à mettre en oeuvre un procédé de gestion conforme à l'une quelconque des revendications 1 à 8.

## Patentansprüche

1. Verfahren zur Verwaltung eines Klimatisierungssystems (1) eines Fahrzeugs, das eine elektrische Batterie (2) umfasst, wobei das System (1) einen ersten Kreislauf (4) zur Zirkulation eines Klimatisierungsmittels aufweist, der über einen Chiller (6) mit einem zweiten Kreislauf (5) zur Zirkulation von Wasser verbunden ist, der zum Kühlen der Batterie (2) bestimmt ist, wobei der erste Kreislauf (4) zur Zirkulation des Klimatisierungsmittels einen Kondensator (7), einen Kompressor (8), einen Verdampfer (9), zwei Magnetventile (10, 11) und zwei Druckminderer (12, 13) umfasst, **dadurch gekennzeichnet, dass** das Verfahren die folgenden Schritte umfasst:
- Einen Schritt des Anforderns der Kühlung der Batterie (2), während das Klimatisierungssystem (1) in Betrieb ist,
- Einen Schritt des Unterbrechens der Wasserzirkulation in dem zweiten Kreislauf (5) während eines gegebenen Zeitraums, wobei der Schritt unmittelbar nach dem Schritt des Anforderns der Kühlung der Batterie (2) ausgelöst wird,
- Einen Schritt des Wiederherstellens der Wasserzirkulation in dem zweiten Kreislauf (5) nach dem gegebenen Zeitraum, um den Chiller (6) wieder zu aktivieren und so die Batterie (2) zu kühlen.

2. Verfahren zur Verwaltung nach Anspruch 1, **dadurch gekennzeichnet, dass** der Schritt des Unterbrechens der Wasserzirkulation über einen Zeitraum von 60 Sekunden oder weniger ausgeführt wird.

3. Verfahren zur Verwaltung nach Anspruch 2, **dadurch gekennzeichnet, dass** der Schritt des Unterbrechens der Wasserzirkulation über einen Zeitraum von 30 Sekunden oder weniger ausgeführt wird.

4. Verfahren zur Verwaltung nach einem der Ansprüche 1 bis 3, **dadurch gekennzeichnet, dass** die Schritte des Unterbrechens von Wasser und des Wiederherstellen der Wasserzirkulation mittels eines Magnetventils ausgeführt werden.

5. Verfahren zur Verwaltung nach einem der Ansprüche 1 bis 4, **dadurch gekennzeichnet, dass** der Schritt des Anforderns der Kühlung der Batterie (2) ausgelöst wird, wenn die Batterie (2) eine vorbestimmte Schwellentemperatur erreicht.

6. Verfahren zur Verwaltung nach einem der Ansprüche 1 bis 5, **dadurch gekennzeichnet, dass** das Klimatisierungsmittel ein Kältemittel 1234yf ist.

7. Verfahren nach einem der Ansprüche 1 bis 6, **dadurch gekennzeichnet, dass** der zweite Kreislauf (5) zur Zirkulation von Wasser eine Pumpe (14) umfasst.

8. Verfahren nach einem der Ansprüche 1 bis 7, **dadurch gekennzeichnet, dass** die verschiedenen Schritte von einer in das Fahrzeug integrierten zentralen Recheneinheit verwaltet werden.

9. Fahrzeug, umfassend eine elektrische Batterie, ein Klimatisierungssystem, das einen ersten Kreislauf (4) zur Zirkulation eines Klimatisierungsmittels aufweist, der einen Kondensator (7), einen Kompressor (8), einen Verdampfer (9), zwei Magnetventile (10, 11) und zwei Druckminderer (12, 13) umfasst und über einen Chiller (6) mit einem zweiten Kreislauf (5) zur Zirkulation von Wasser verbunden ist, der zum Kühlen der Batterie (2) bestimmt ist, **dadurch gekennzeichnet, dass** es eine zentrale Recheneinheit umfasst, die mit einer Software ausgestattet ist, die geeignet ist, ein Verfahren zur Verwaltung nach einem der Ansprüche 1 bis 8 durchzuführen.

## Claims

1. Method for managing an air-conditioning system (1) of a vehicle comprising an electric battery (2), said system (1) having a first circuit (4) for circulation of an air-conditioning fluid, connected via a chiller (6) to a second circuit (5) for circulation of water intended to cool said battery (2), the first circuit (4) for circulation of the air-conditioning fluid comprising a condenser (7), a compressor (8), an evaporator (9), two solenoid valves (10, 11) and two expansion valves (12, 13), **characterized in that** the method comprises the following steps:
- A step of demanding cooling of the battery (2) when the air-conditioning system (1) is in operation,
- A step of interrupting the circulation of water in the second circuit (5) for a given period, said step being triggered just after the step of demanding cooling of the battery (2),
- A step of re-establishing the circulation of water in the second circuit (5) after the given period so as to reactivate the chiller (6) and thus cool said battery (2) .

2. Management method according to Claim 1, **characterized in that** the step of interrupting the circulation of water is carried out over a period less than or equal to 60 seconds.

3. Management method according to Claim 2, **characterized in that** the step of interrupting the circulation of water is carried out over a period less than or equal to 30 seconds.

4. Management method according to any one of Claims 1 to 3, **characterized in that** the steps of interrupting water and re-establishing the circulation of water are carried out by means of a solenoid valve.

5. Management method according to any one of Claims 1 to 4, **characterized in that** the step of demanding cooling of the battery (2) is triggered when the battery (2) reaches a predetermined threshold temperature.

6. Management method according to any one of Claims 1 to 5, **characterized in that** the air-conditioning fluid is a 1234yf refrigerant.

7. Method according to any one of Claims 1 to 6, **characterized in that** the second circuit (5) for circulation of water comprises a pump (14).

8. Method according to any one of Claims 1 to 7, **characterized in that** the various steps are managed by a central processing unit on board the vehicle.

9. Vehicle comprising an electric battery, an air-conditioning system having a first circuit (4) for circulation of an air-conditioning fluid comprising a condenser (7), a compressor (8), an evaporator (9), two solenoid valves (10, 11) and two expansion valves (12, 13), connected via a chiller (6) to a second circuit (5) for circulation of water intended to cool said battery (2), **characterized in that** it comprises a central processing unit provided with software that is able to implement a management method in accordance with any one of Claims 1 to 8.
